# EUROPÄISCHE PATENTANMELDUNG

(11) **EP 3 075 529 A1**
(43) Veröffentlichungstag der Anmeldung: **05.10.2016**
(21) Anmeldenummer: 16000558.3
(22) Anmeldetag: 08.03.2016
(51) Int. Cl.: B32B 5/22, B32B 5/24, B32B 5/26, B32B 5/28, B32B 7/02, B32B 27/12, B32B 27/30, E03D 1/00, E03D 1/01

(54) **VORWANDINSTALLATIONSABDECKUNG, BEINHALTEND EINE THERMOPLASTISCHE SCHICHT UND VERSTÄRKUNGSSCHICHTEN, SOWIE EINE VORRICHTUNG BEINHALTEND DIE VORWANDINSTALLATIONSABDECKUNG**

(30) Priorität: 09.03.2015 DE 102015002895
(71) Anmelder: Grohe AG, 58675 Hemer (DE)
(72) Erfinder: Stahlhut, Ulrich, 32469 Petershagen (DE); Meister, Gunnar, 40474 Düsseldorf (DE)

(57) **Zusammenfassung**

Die Erfindung betrifft eine Vorwandinstallationsabdeckung, wobei die Vorwandinstallationsabdeckung einen wandseitig vorgesehenen Innenraum mindestens teilweise schalenförmig umgibt, wobei die Vorwandinstallationsabdeckung eine dem Innenraum zugewandte Innenoberfläche und eine dem Innenraum abgewandte Außenoberfläche beinhaltet, wobei die Vorwandinstallationsabdeckung über mindestens 50 % der Außenoberfläche in Richtung von der Außenoberfläche zu der Innenoberfläche eine Schichtfolge beinhaltend als einander überlagernde Schichten
a) eine thermoplastische Schicht beinhaltend ein thermoplastisches Material mit einem ersten Elastizitätsmodul,
b) eine erste Verstärkungsschicht beinhaltend ein erstes Verstärkungsmaterial mit einem zweiten Elastizitätsmodul, und
c) eine weitere Verstärkungsschicht beinhaltend ein weiteres Verstärkungsmaterial mit einem dritten Elastizitätsmodul,
beinhaltet, wobei der zweite Elastizitätsmodul oder der dritte Elastizitätsmodul oder jeweils beide mehr ist als der erste Elastizitätsmodul. Weiter betrifft die Erfindung eine Vorrichtung beinhaltend die Vorwandinstallationsabdeckung, und eine Verwendung der Vorwandinstallationsabdeckung.

## Beschreibung

Die vorliegende Erfindung betrifft eine Vorwandinstallationsabdeckung, wobei die Vorwandinstallationsabdeckung einen wandseitig vorgesehenen Innenraum mindestens teilweise schalenförmig umgibt, wobei die Vorwandinstallationsabdeckung eine dem Innenraum zugewandte Innenoberfläche und eine dem Innenraum abgewandte Außenoberfläche beinhaltet, wobei die Vorwandinstallationsabdeckung über mindestens 50 % der Außenoberfläche in Richtung von der Außenoberfläche zu der Innenoberfläche eine Schichtfolge beinhaltend als einander überlagernde Schichten
a) eine thermoplastische Schicht beinhaltend ein thermoplastisches Material mit einem ersten Elastizitätsmodul,
b) eine erste Verstärkungsschicht beinhaltend ein erstes Verstärkungsmaterial mit einem zweiten Elastizitätsmodul, und
c) eine weitere Verstärkungsschicht beinhaltend ein weiteres Verstärkungsmaterial mit einem dritten Elastizitätsmodul,
beinhaltet, wobei der zweite Elastizitätsmodul oder der dritte Elastizitätsmodul oder jeweils beide mehr ist als der erste Elastizitätsmodul. Weiter betrifft die Erfindung eine Vorrichtung beinhaltend die Vorwandinstallationsabdeckung, und eine Verwendung der Vorwandinstallationsabdeckung.

Beim Installieren von Rohrleitungen, Spülkästen, Druckspülern und anderen Einrichtungen im Sanitärbereich bestehen grundsätzlich die Möglichkeiten diese unter Putz zu installieren oder auf Putz als Vorwandinstallation. Unterputzinstallationen haben dabei den Nachteil, dass sie fest mit dem Bauwerk verbunden sind und somit ein Entfernen der Unterputzinstallationen einen erheblichen baulichen Aufwand bedeutet. Dies ist insbesondere in Mieträumen oft ungewünscht. Vorwandinstallationen dagegen können leichter entfernt oder ausgetauscht werden, auch zu Reparatur- oder Wartungszwecken. Für eine ästhetische Raumgestaltung sind die sichtbaren Vorwandinstallationen jedoch nachteilig. Ein Verkleiden der Vorwandinstallationen mit Trockenbaukonstruktionen vermindert die vorgenannten Nachteile, solche Konstruktionen sind jedoch immer noch eher aufwendig zu installieren und aufwendig rückstandslos aus Mietobjekten zu entfernen. Zudem beinhalten solche Konstruktionen oft Fugen oder Nähte, die insbesondere in öffentlichen Sanitärräumen den Reinigungsaufwand oder die für das Reinigen benötigte Zeit erhöhen.

Allgemein ist es eine Aufgabe der vorliegenden Erfindung, einen Nachteil, der sich aus dem Stand der Technik ergibt, zumindest teilweise zu überwinden. Eine weitere Aufgabe der Erfindung ist es, eine stabilere oder haltbarere oder beides Vorwandinstallationsabdeckung bereitzustellen. Eine weitere Aufgabe der Erfindung ist es, eine leichter zu reinigende und somit hygienischere Vorwandinstallationsabdeckung bereitzustellen. Eine weitere Aufgabe der Erfindung ist es, eine möglichst einfach zu installierende oder möglichst einfach an vorhandene bauliche Gegebenheiten anpassbare oder beides Vorwandinstallationsabdeckung bereitzustellen. Ferner ist es eine Aufgabe der Erfindung, eine möglichst einfache und möglichst ohne Sanierungsarbeiten entfernbare Vorwandinstallationsabdeckung bereitzustellen. Eine weitere Aufgabe der Erfindung ist es, eine vorgefertigte Vorwandinstallationsabdeckung mit einer großen Vielfalt möglicher Oberflächengestaltungen bereitzustellen. Eine weitere Aufgabe der Erfindung ist es, eine leicht, beispielsweise durch einfaches Abschleifen, an bauseitig gegebene Wandkonturen anpassbare Vorwandinstallationsabdeckung bereitzustellen. Eine weitere Aufgabe der Erfindung ist es, eine möglichst leichte Vorwandinstallationsabdeckung bereitzustellen. Ferner ist es eine Aufgabe der Erfindung, eine Vorwandinstallation, bevorzugt einen Spülkasten, mit einer der oben beschriebenen vorteilhaften Vorwandinstallationsabdeckungen zu verkleiden. Eine weitere Aufgabe der Erfindung ist es, eine Toilette oder ein Urinal bereitzustellen, welches an einer oben beschriebenen vorteilhaften Vorwandinstallationsabdeckung hängend befestigt ist. Eine weitere Aufgabe der Erfindung ist es einen möglichst einfach oder schnell oder beides zu reinigenden und pflegeleichten Toilettenraum, insbesondere einen öffentlichen Toilettenraum, bereitzustellen.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.

Einen Beitrag zur Erfüllung mindestens einer der erfindungsgemäßen Aufgaben leistet eine Ausführungsform 1 einer Vorwandinstallationsabdeckung, wobei die Vorwandinstallationsabdeckung einen wandseitig vorgesehenen Innenraum mindestens teilweise schalenförmig umgibt, wobei die Vorwandinstallationsabdeckung eine dem Innenraum zugewandte Innenoberfläche und eine dem Innenraum abgewandte Außenoberfläche beinhaltet, wobei die Vorwandinstallationsabdeckung über mindestens 50 %, bevorzugt mindestens 60 %, bevorzugter mindestens 70 %, bevorzugter mindestens 80 %, am bevorzugtesten mindestens 90 %, der Außenoberfläche in Richtung von der Außenoberfläche zu der Innenoberfläche eine Schichtfolge beinhaltend als einander überlagernde Schichten
a) eine thermoplastische Schicht beinhaltend ein thermoplastisches Material mit einem ersten Elastizitätsmodul,
b) eine erste Verstärkungsschicht beinhaltend ein erstes Verstärkungsmaterial mit einem zweiten Elastizitätsmodul, und
c) eine weitere Verstärkungsschicht beinhaltend ein weiteres Verstärkungsmaterial mit einem dritten Elastizitätsmodul,
beinhaltet, wobei der zweite Elastizitätsmodul oder der dritte Elastizitätsmodul oder jeweils beide mehr ist als der erste Elastizitätsmodul. Besonders bevorzugt ist der zweite Elastizitätsmodul mehr als der erste Elastizitätsmodul. Weiter bevorzugt ist der zweite Elastizitätsmodul, oder der dritte Elastizitätsmodul, oder jeweils beide mindestens um einen Faktor 1,5, bevorzugt um einen Faktor 2, bevorzugter um einen Faktor 2,5, am bevorzugtesten um einen Faktor 3, mehr als der erste Elastizitätsmodul. Eine bevorzugte thermoplastische Schicht ist ein durch Umformen erhaltenes Bauteil. Ein bevorzugtes Umformen ist eines ausgewählt aus der Gruppe bestehend auch einem Druckumformen, einem Zugdruckumformen, einem Biegeumformen und einem Schubumformen oder eine Kombination aus mindestens zwei davon. Ein bevorzugtes Zugdruckumformen ist ein Tiefziehen.

Eine erfindungsgemäße Ausführungsform 2 der Vorwandinstallationsabdeckung ist nach der Ausführungsform 1 ausgestaltet, wobei die thermoplastische Schicht gekennzeichnet ist durch eine erste Schichtdicke, wobei die erste Verstärkungsschicht gekennzeichnet ist durch eine weitere Schichtdicke, wobei die erste Schichtdicke weniger ist als die weitere Schichtdicke. Die erste Verstärkungsschicht kann Bereiche unterschiedlicher Dicke beinhalten, wobei die erste Verstärkungsschicht bevorzugt in jedem dieser Bereiche dicker ist als die erste Schichtdicke.

Eine erfindungsgemäße Ausführungsform 3 der Vorwandinstallationsabdeckung ist nach der Ausführungsform 1 oder 2 ausgestaltet, wobei die thermoplastische Schicht gekennzeichnet ist durch eine Schichtdicke in einem Bereich von 1 bis 20 mm, bevorzugt von 3 bis 15 mm, bevorzugter von 5 bis 10 mm. Bevorzugt ist die vorgenannte Schichtdicke eine maximale Schichtdicke der thermoplastischen Schicht.

Eine erfindungsgemäße Ausführungsform 4 der Vorwandinstallationsabdeckung ist nach einer der vorhergehenden Ausführungsformen ausgestaltet, wobei das thermoplastische Material ein acrylbasiertes Polymer ist. Ein bevorzugtes acrylbasiertes Polymer ist Polymethylmethacrylat (PMMA), welches auch als Acrylglas oder unter dem Handelsnamen Plexiglas bekannt ist. Bevorzugt beinhaltet die thermoplastische Schicht weiter einen Füllstoff. Ein bevorzugter Füllstoff ist ein Farbmittel, bevorzugt ein Pigment. Eine andere bevorzugte thermoplastische Schicht beinhaltet das thermoplastische Material zu mindestens 70 Gew.-%, bevorzugt zu mindestens 80 Gew.-%, bevorzugter zu mindestens 90 Gew.-%, am bevorzugtesten zu mindestens 95 Gew.-%, jeweils bezogen auf das Gesamtgewicht der thermoplastischen Schicht.

Eine erfindungsgemäße Ausführungsform 5 der Vorwandinstallationsabdeckung ist nach einer der vorhergehenden Ausführungsformen ausgestaltet, wobei das erste Verstärkungsmaterial Cellulose beinhaltet, vorzugsweise Holz ist. Eine bevorzugte erste Verstärkungsschicht beinhaltet das erste Verstärkungsmaterial zu mindestens 70 Gew.-%, bevorzugt zu mindestens 80 Gew.-%, bevorzugter zu mindestens 90 Gew.-%, am bevorzugtesten zu mindestens 95 Gew.-%, jeweils bezogen auf das Gesamtgewicht der ersten Verstärkungsschicht.

Eine erfindungsgemäße Ausführungsform 6 der Vorwandinstallationsabdeckung ist nach einer der vorhergehenden Ausführungsformen ausgestaltet, wobei das weitere Verstärkungsmaterial eine Vielzahl von Fasern, vorzugsweise Glasfasern, beinhaltet. Eine bevorzugte weitere Verstärkungsschicht beinhaltet das weitere Verstärkungsmaterial zu mindestens 70 Gew.-%, bevorzugt zu mindestens 80 Gew.-%, bevorzugter zu mindestens 90 Gew.-%, am bevorzugtesten zu mindestens 95 Gew.-%, jeweils bezogen auf das Gesamtgewicht der weiteren Verstärkungsschicht. Bevorzugt ist das weitere Verstärkungsmaterial ein Glasfaserverbundwerkstoff. Ein anderes bevorzugtes weiteres Verstärkungsmaterial beinhaltet weiter ein Kunstharz. Ein bevorzugtes Kunstharz ist eines ausgewählt aus der Gruppe bestehend aus Polyethylenharz, Polyesterharz, Epoxidharz, Phenol-Formaldehyharz, Silikonharz und Melaminharz oder eine Kombination aus mindestens zwei davon. Besonders bevorzugt ist Polyethylenharz. Ein bevorzugtes weiteres Verstärkungsmaterial hat einen Faseranteil in einem Bereich von 10 bis 80 Gew.-%, bevorzugt von 20 bis 80 Gew.-%, bevorzugter von 35 bis 70 Gew.-%, am bevorzugtesten von 50 bis 65 Gew.-%, jeweils bezogen auf das Gesamtgewicht des weiteren Verstärkungsmaterials.

Eine erfindungsgemäße Ausführungsform 7 der Vorwandinstallationsabdeckung ist nach einer der vorhergehenden Ausführungsformen ausgestaltet, wobei die weitere Verstärkungsschicht einstückig ausgebildet ist. Die weitere Verstärkungsschicht besteht bevorzugt aus einem aufgesprühten Glasfaserwerkstoff.

Eine erfindungsgemäße Ausführungsform 8 der Vorwandinstallationsabdeckung ist nach einer der vorhergehenden Ausführungsformen ausgestaltet, wobei die Außeroberfläche kratzfest ausgerüstet ist.

Eine erfindungsgemäße Ausführungsform 9 der Vorwandinstallationsabdeckung ist nach einer der vorhergehenden Ausführungsformen ausgestaltet, wobei die Außenoberfläche glatter ist als die Innenoberfläche.

In einer weiteren erfindungsgemäßen Ausführungsform ist die Außenoberfläche strukturiert, beispielsweise einer Oberfläche eines Baumaterials wie Stein, Beton oder Holz nachempfunden. Somit stellt die Außenoberfläche in dieser Ausführungsform eine dekorative Strukturoberfläche dar. In diesem Fall kann die Außenoberfläche rauer als die Innenoberfläche ausgebildet sein.

Eine erfindungsgemäße Ausführungsform 10 der Vorwandinstallationsabdeckung ist nach einer der vorhergehenden Ausführungsformen ausgestaltet, wobei die Außenoberfläche nahtlos oder fugenlos oder beides ist. Hierdurch ist die Außenoberfläche insbesondere leicht zu reinigen und somit hygienisch.

Eine erfindungsgemäße Ausführungsform 11 der Vorwandinstallationsabdeckung ist nach einer der vorhergehenden Ausführungsformen ausgestaltet, wobei die thermoplastische Schicht den Innenraum zu mindestens 2 Seiten, bevorzugt zu mindestens 3 Seiten, und nach oben einstückig umgibt. In einer weiteren Ausführungsform kann die Vorwandinstallationsabdeckung eine Revisionsklappe beinhalten.

Eine erfindungsgemäße Ausführungsform 12 der Vorwandinstallationsabdeckung ist nach einer der vorhergehenden Ausführungsformen ausgestaltet, wobei eine wandseitig vorgesehene Stirnkante der thermoplastischen Schicht oder der ersten Verstärkungsschicht oder beider von der weiteren Verstärkungsschicht wandseitig überlagert ist. Bevorzugt umsäumt die weitere Verstärkungsschicht die thermoplastische Schicht und die erste Verstärkungsschicht an der wandseitig vorgesehenen Stirnkante.

Eine erfindungsgemäße Ausführungsform 13 der Vorwandinstallationsabdeckung ist nach einer der vorhergehenden Ausführungsformen ausgestaltet, wobei die Vorwandinstallationsabdeckung einen wandseitig vorgesehenen Rahmenbereich beinhaltet, wobei eine Dicke der Vorwandinstallationsabdeckung in dem Rahmenbereich weniger ist als eine Dicke der Schichtfolge. Bevorzugt beinhaltet der Rahmenbereich keinen Teil der ersten Verstärkungsschicht. Bevorzugt ist der Rahmenbereich als Teil der thermoplastischen Schicht ausgebildet. Der Rahmenbereich ist bevorzugt so ausgebildet, dass er zu einem Anpassen einer Tiefe des Innenraums leicht abgeschliffen werden kann.

Einen Beitrag zur Erfüllung mindestens einer der erfindungsgemäßen Aufgaben leistet eine Ausführungsform 1 einer Vorrichtung beinhaltend die Vorwandinstallationsabdeckung nach einer ihrer Ausführungsformen 1 bis 13, wobei der Innenraum einen Trägerrahmen und eine Vorwandinstallation beinhaltet. Ein bevorzugter Trägerrahmen besteht aus einem Metall, bevorzugt aus Stahl oder Aluminium oder beidem.

Eine erfindungsgemäße Ausführungsform 2 der Vorrichtung ist nach der Ausführungsform 1 ausgestaltet, wobei die Vorwandinstallation ein Spülkasten oder ein Druckspüler oder beides ist, wobei der Innenraum weiter einen Sensor und eine Auslöseeinrichtung beinhaltet, wobei der Sensor und die Auslöseeinrichtung ausgebildet sind zu einem berührungslosen Auslösen eines Spülvorgangs mittels der Vorwandinstallation. Ein bevorzugter Sensor ist einer ausgewählt aus der Gruppe bestehend aus einem Infrarotsensor, einem Radarsensor, einer Lichtschranke, einem Wärmesensor, einem Leitfähigkeitssensor und einem pH-Wertsensor oder eine Kombination aus mindestens zwei davon. Ist die Vorwandinstallation ein Druckspüler, so ist der Sensor bevorzugt ein Radarsensor. Ein bevorzugter Radarsensor ist in einer Detektionsrichtung bevorzugt von der Schichtfolge, beinhaltend die thermoplastische Schicht, die erste Verstärkungsschicht und die weitere Verstärkungsschicht, abgedeckt. Ein anderer Sensor, wie beispielsweise ein Infrarotsensor ist in der Detektionsrichtung bevorzugt nicht von der vollständigen Schichtfolge abgedeckt. Zu diesem Zweck kann die Vorwandinstallationsabdeckung eine Öffnung beinhalten, welche bevorzugt mit einer separaten Abdeckung verschlossen ist, oder die Vorwandinstallationsabdeckung kann in einem Bereich die erste Verstärkungsschicht oder die weitere Verstärkungsschicht oder beide nicht beinhalten. Bevorzugt beinhaltet die Vorwandinstallationsabdeckung in einem den Sensor in Detektionsrichtung abdeckenden Bereich die erste Verstärkungsschicht nicht oder mit einer geringeren Schichtdicke als in angrenzenden Bereichen.

Eine erfindungsgemäße Ausführungsform 3 der Vorrichtung ist nach der Ausführungsform 1 ausgestaltet, wobei die Vorwandinstallation ein Spülkasten oder ein Druckspüler oder beides ist, wobei die Vorrichtung weiter eine Handauslöseeinrichtung beinhaltet, wobei die Handauslöseeinrichtung ausgebildet ist zu einem Auslösen eines Spülvorgangs mittels der Vorwandinstallation durch manuelle Betätigung.

Eine erfindungsgemäße Ausführungsform 3 der Vorrichtung ist nach einer der Ausführungsformen 1 bis 3 ausgestaltet, wobei die Vorrichtung weiter eine Toilettenschüssel oder ein Urinal oder beides beinhaltet, wobei die Toilettenschüssel oder das Urinal oder beides an dem Trägerrahmen befestigt ist. Bevorzugt ist die Toilettenschüssel oder das Urinal oder beides mittels Befestigungsmitteln, bevorzugt Schrauben oder Bolzen, an dem Trägerrahmen befestigt. Hierbei durchdringen die Befestigungsmittel bevorzugt die Vorwandinstallationsabdeckung von der Außenoberfläche zu der Innenoberfläche in dafür vorgesehenen Befestigungsöffnungen.

Einen Beitrag zur Erfüllung mindestens einer der erfindungsgemäßen Aufgaben leistet eine Ausführungsform 1 einer Verwendung der Vorwandinstallationsabdeckung nach einer der Ausführungsformen 1 bis 13 zu einem Abdecken einer Vorwandinstallation.

Bevorzugte Ausgestaltungen von Bestandteilen einer erfindungsgemäßen Kategorie, insbesondere der Vorwandinstallationsabdeckung und der Vorrichtung sind ebenso bevorzugt für gleichnamige oder entsprechende Bestandteile der anderen erfindungsgemäßen Kategorien.

### Vorwandinstallation

Eine bevorzugte Vorwandinstallation ist eines ausgewählt aus der Gruppe bestehend aus einem Spülkasten, einem Druckspüler, einer Wasserleitung, einem Abfluss und einem Siphon oder eine Kombination aus mindestens zwei davon.

### MESSMETHODEN

Die folgenden Messmethoden wurden im Rahmen der Erfindung benutzt. Sofern nichts anderes angegeben ist wurden die Messungen bei einer Umgebungstemperatur von 25°C, einem Umgebungsluftdruck von 100 kPa (0,986 atm) und einer relativen Luftfeuchtigkeit von 50 % durchgeführt.

### Elastizitätsmodul

Der Elastizitätsmodul wurde im Falle von Holz / Spanplatten als Schichtmaterial gemäß der DIN EN 312:2010-12 bestimmt. Im Falle eines Kunststoffs als Schichtmaterial wurde der Elastizitätsmodul gemäß der DIN EN ISO 527-1:2012-06 gemessen. Bei faserverstärkten Kunststoffen mit definierter Faserrichtung wurde der Elastizitätsmodul in Faserrichtung gemessen.

Die Erfindung wird im Folgenden durch Beispiele und Zeichnungen genauer dargestellt, wobei die Beispiele und Zeichnungen keine Einschränkung der Erfindung bedeuten. Ferner sind die Zeichnungen schematisch und nicht maßstabsgetreu.

Es zeigen:
- Figur 1a): eine erfindungsgemäße Vorwandinstallationsabdeckung in perspektivischer Darstellung;
- Figur 1b): die erfindungsgemäße Vorwandinstallationsabdeckung in Figur 1a) in Frontsicht;
- Figur 1c): die erfindungsgemäße Vorwandinstallationsabdeckung in Figur 1a) in Draufsicht;
- Figur 2a): eine weitere erfindungsgemäße Vorwandinstallationsabdeckung in perspektivischer Darstellung;
- Figur 2b): die erfindungsgemäße Vorwandinstallationsabdeckung in Figur 2a) in Frontsicht;
- Figur 2c): die erfindungsgemäße Vorwandinstallationsabdeckung in Figur 2a) in Draufsicht;
- Figur 3: eine Schichtfolge einer erfindungsgemäßen Vorwandinstallationsabdeckung;
- Figur 4: eine weitere erfindungsgemäße Vorwandinstallationsabdeckung in Draufsicht mit einer vergrößerten Darstellung einer Kante;
- Figur 5: eine weitere erfindungsgemäße Vorwandinstallationsabdeckung in einer Querschnittdarstellung;
- Figur 6: eine erfindungsgemäße Vorrichtung; und
- Figur 7: eine weitere erfindungsgemäße Vorrichtung.

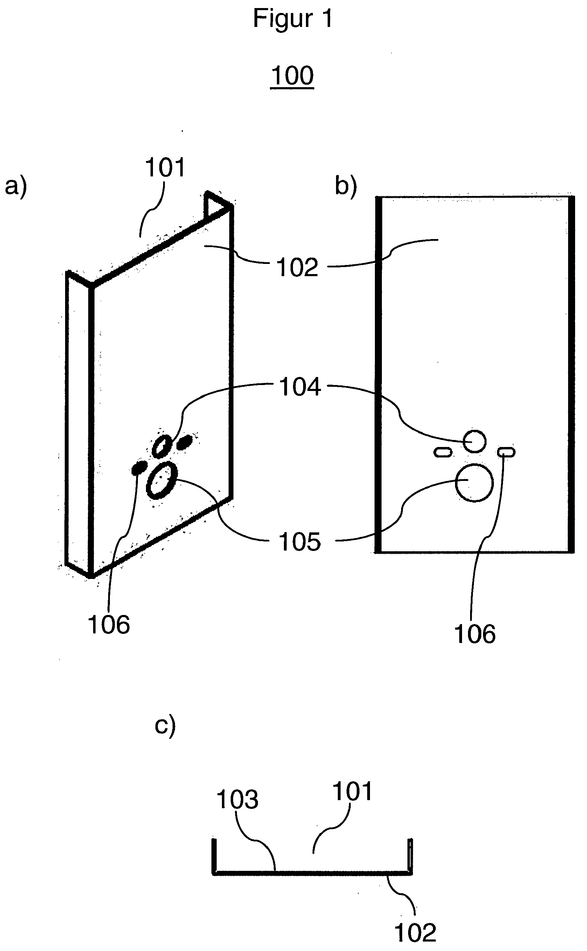

Figur 1a) zeigt eine erfindungsgemäße Vorwandinstallationsabdeckung 100 in perspektivischer Darstellung. Die Vorwandinstallationsabdeckung 100 umgibt einen Innenraum 101 schalenförmig. Hier umgibt die Vorwandinstallationsabdeckung 100 den Innenraum 101 zu 3 Seiten. Die Vorwandinstallationsabdeckung 100 beinhaltet eine Außenoberfläche 102, welche dem Innenraum 101 abgewandt ist. Ferner beinhaltet die Vorwandinstallationsabdeckung 100 eine Zuflussöffnung 104, welche ausgebildet ist zum Anschließen einer Wasserzuführung für eine Toilette. Weiter beinhaltet die Vorwandinstallationsabdeckung 100 eine Abflussöffnung 105, welche ausgebildet ist zum Anschließen eines Abflusses der Toilette. Die Vorwandinstallationsabdeckung 100 beinhaltet weitere 2 Befestigungsöffnungen 106, welche ausgebildet sind zum Befestigen einer hängenden Toilettenschüssel 701 (nicht dargestellt) an der Vorwandinstallationsabdeckung mittels Befestigungsbolzen 604 (nicht dargestellt).

Figur 1b) zeigt die erfindungsgemäße Vorwandinstallationsabdeckung 100 in Figur 1a) in Frontsicht auf einen Frontbereich der Außenoberfläche 102.

Figur 1c) zeigt die erfindungsgemäße Vorwandinstallationsabdeckung in Figur 1a) in Draufsicht. Die Vorwandinstallationsabdeckung 100 beinhaltet eine Außenoberfläche 102, welche dem Innenraum 101 abgewandt ist und eine Innenoberfläche 103, welche dem Innenraum 101 zugewandt ist.

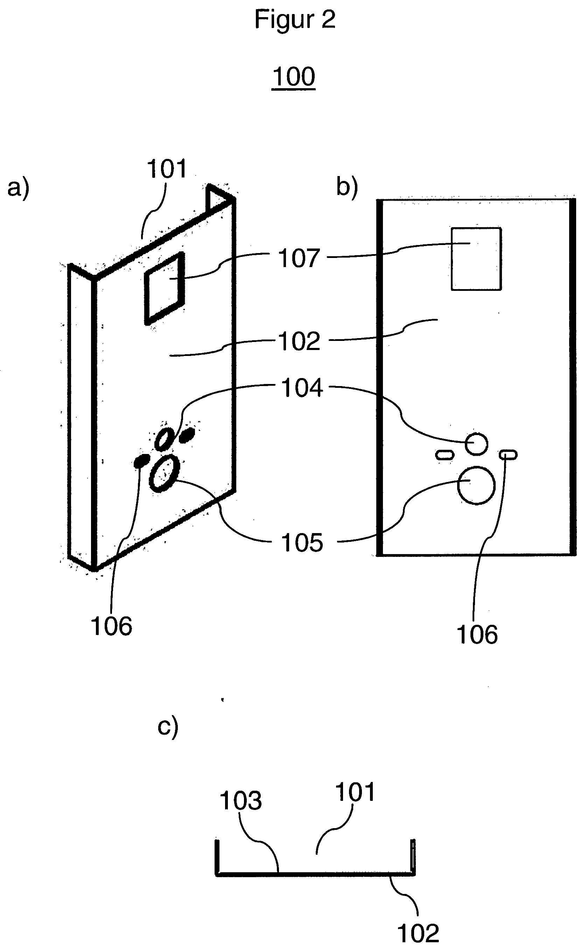

Figur 2a) zeigt eine erfindungsgemäße Vorwandinstallationsabdeckung 100 in perspektivischer Darstellung. Die Vorwandinstallationsabdeckung 100 ist wie die Vorwandinstallationsabdeckung 100 in Figur 1a), wobei die Vorwandinstallationsabdeckung 100 in Figur 2a) weiter eine Handauslöseöffnung 107 beinhaltet. Die Handauslöseöffnung 107 ist ausgebildet zum Aufnehmen einer Handauslöseeinrichtung 603, insbesondere eines Drucktasters (nicht dargestellt).

Figur 2b) zeigt die erfindungsgemäße Vorwandinstallationsabdeckung 100 in Figur 2a) in Frontsicht auf einen Frontbereich der Außenoberfläche 102.

Figur 2c) zeigt die erfindungsgemäße Vorwandinstallationsabdeckung in Figur 2a) in Draufsicht. Die Vorwandinstallationsabdeckung 100 beinhaltet eine Außenoberfläche 102, welche dem Innenraum 101 abgewandt ist und eine Innenoberfläche 103, welche dem Innenraum 101 zugewandt ist.

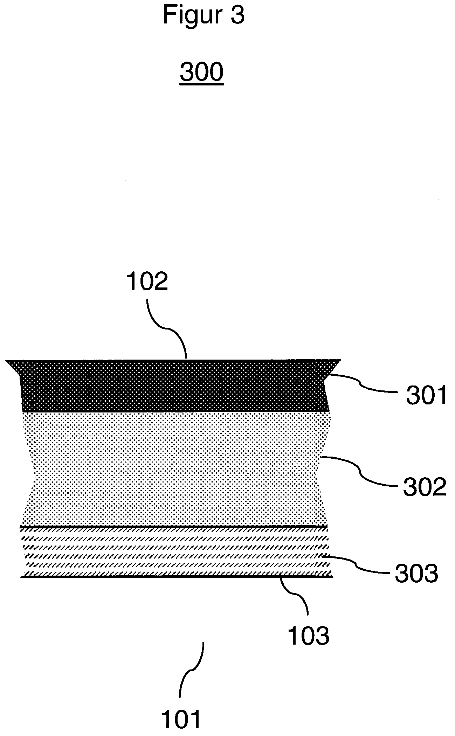

Figur 3 zeigt eine Schichtfolge 300 einer erfindungsgemäßen Vorwandinstallationsabdeckung 100. Die Schichtfolge 300 beinhaltet von einer einem Innenraum 101 abgewandten Außenoberfläche 102 zu einer dem Innenraum 101 zugewandten Innenoberfläche 103 als einander überlagernde Schichten eine thermoplastische Schicht 301, eine erste Verstärkungsschicht 302 und eine weitere Verstärkungsschicht 303. Die thermoplastische Schicht 301 besteht aus einem thermoplastischen Material mit einem ersten Elastizitätsmodul. Die erste Verstärkungsschicht 302 besteht aus einem ersten Verstärkungsmaterial mit einem zweiten Elastizitätsmodul. Die weitere Verstärkungsschicht 303 besteht aus einem weiteren Verstärkungsmaterial mit einem dritten Elastizitätsmodul. Der zweite Elastizitätsmodul ist mehr als der erste Elastizitätsmodul. Die thermoplastische Schicht 301 ist ein tiefgezogenes Bauteil aus Acrylglas. Die thermoplastische Schicht 301 hat eine maximale Schichtdicke von 6 mm. Die erste Verstärkungsschicht 302 besteht aus Holz als dem ersten Verstärkungsmaterial. Das Holz hat in verschiedenen Bereichen der ersten Verstärkungsschicht 302 unterschiedliche Dicken, ist jedoch stets dicker als 6 mm. Die weitere Verstärkungsschicht 303 besteht aus Glasfasern, welche in einem Polyethylenharz eingebettet sind. Die weitere Verstärkungsschicht 303 wurde durch Aufsprühen aufgetragen.

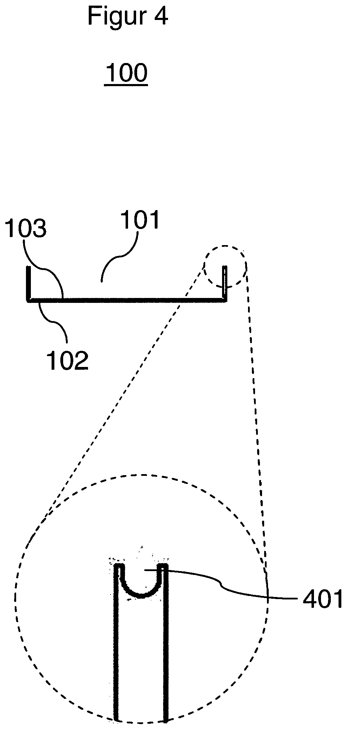

Figur 4 zeigt eine weitere erfindungsgemäße Vorwandinstallationsabdeckung 100 in Draufsicht mit einer vergrößerten Darstellung einer Kante. Die Vorwandinstallationsabdeckung 100 ist die die Vorwandinstallationsabdeckung 100 in Figur 1a), wobei die Vorwandinstallationsabdeckung in Figur 4 weiter an einer wandseitig vorgesehenen Kante eine Ausnehmung 401 beinhaltet. Die Ausnehmung 401 ist ausgebildet zum Aufnehmen eines Dichtmaterials wie einer Kunststoffleiste.

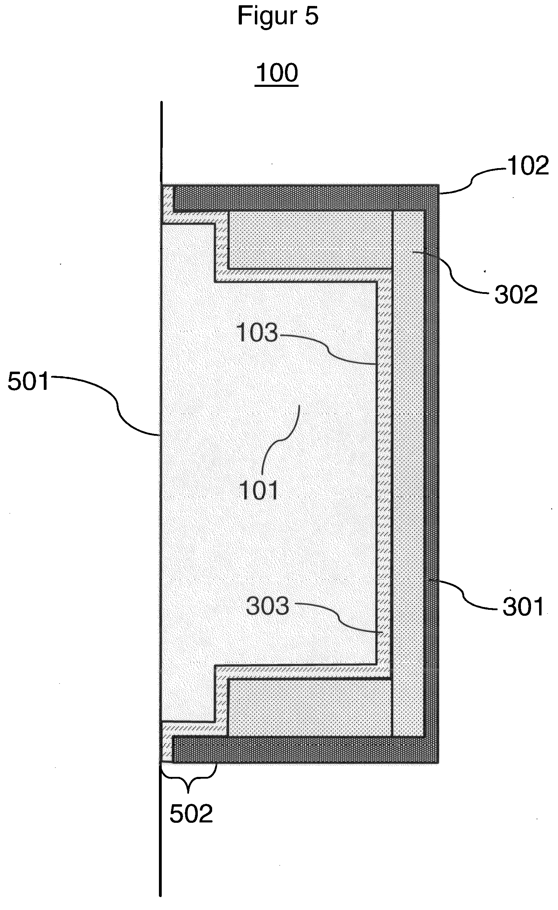

Figur 5 zeigt eine weitere erfindungsgemäße Vorwandinstallationsabdeckung 100 in einer Querschnittdarstellung. Die Vorwandinstallationsabdeckung 100 umgibt einen Innenraum 101 schalenförmig. Hier umgibt die Vorwandinstallationsabdeckung 100 den Innenraum 101 zu 3 Seiten. Die Vorwandinstallationsabdeckung 100 beinhaltet eine Außenoberfläche 102, welche dem Innenraum 101 abgewandt ist und eine Innenoberfläche 103, welche dem Innenraum 101 zugewandt ist. Der Innenraum 101 ist wandseitig vorgesehen. Hier wird er Innenraum 101 teilweise umgeben von der Vorwandinstallationsabdeckung 100 und der ebenfalls dargestellten Wand 501. Die Vorwandinstallationsabdeckung 100 beinhaltet eine Schichtfolge 300, beinhaltend als einander überlagernde Schichten von der Außenoberfläche 102 zu der Innenoberfläche 103 eine thermoplastische Schicht 301, eine erste Verstärkungsschicht 302 und eine weitere Verstärkungsschicht 303. Die Vorwandinstallationsabdeckung 100 beinhaltet die Schichtfolge 300 über 90 % der Außenoberfläche 102, insbesondere über einen gesamten Frontbereich und teilweise über zwei Seitenbereiche. Die thermoplastische Schicht 301 besteht aus einem thermoplastischen Material mit einem ersten Elastizitätsmodul. Die erste Verstärkungsschicht 302 besteht aus einem ersten Verstärkungsmaterial mit einem zweiten Elastizitätsmodul. Die weitere Verstärkungsschicht 303 besteht aus einem weiteren Verstärkungsmaterial mit einem dritten Elastizitätsmodul. Der erste Elastizitätsmodul beträgt 3300 MPa. Der zweite Elastizitätsmodul beträgt 12000 MPa. Der dritte Elastizitätsmodul beträgt 44000 MPa. Die thermoplastische Schicht 301 ist ein tiefgezogenes Bauteil aus Acrylglas als dem thermoplastischen Material. Somit ist die thermoplastische Schicht 301 einstückig und die Außenoberfläche 102 fugenlos. Die thermoplastische Schicht 301 hat eine maximale Schichtdicke von 6 mm. Die erste Verstärkungsschicht 302 besteht aus Holz. Das Holz hat in verschiedenen Bereichen der ersten Verstärkungsschicht unterschiedliche Dicken, ist jedoch stets dicker als 30 mm. Die weitere Verstärkungsschicht 303 besteht aus einem glasfaserverstärkten Polyethylenharz mit einem Glasfaseranteil von 60 Gew.-% bezogen auf das Gesamtgewicht des weiteren Verstärkungsmaterials. Die weitere Verstärkungsschicht 303 wurde durch Aufsprühen aufgetragen und ist somit einstückig ausgebildet. Die Außenoberfläche 102 ist kratzfest ausgerüstet und glatter als die Innenoberfläche 103. Eine wandseitig vorgesehene Stirnkante der thermoplastischen Schicht 301 ist von der weiteren Verstärkungsschicht 303 wandseitig überlagert. Die weitere Verstärkungsschicht 303 umsäumt die wandseitigen Stirnkanten der thermoplastischen Schicht 301 und der ersten Verstärkungsschicht 302. Ferner beinhaltet die Vorwandinstallationsabdeckung 100 einen wandseitigen Rahmenbereich 502. In dem Rahmenbereich 502 ist eine Dicke der Vorwandinstallationsabdeckung 100 weniger ist als eine minimale Dicke der Schichtfolge 300 mit der thermoplastischen Schicht 301, der ersten Verstärkungsschicht 302 und der weiteren Verstärkungsschicht 303. Der Rahmenbereich 502 beinhaltet keinen Teil der ersten Verstärkungsschicht 302. Der Rahmenbereich ist ferner so ausgebildet, dass er zu einem Anpassen einer Tiefe des Innenraums 101 leicht abgeschliffen werden kann.

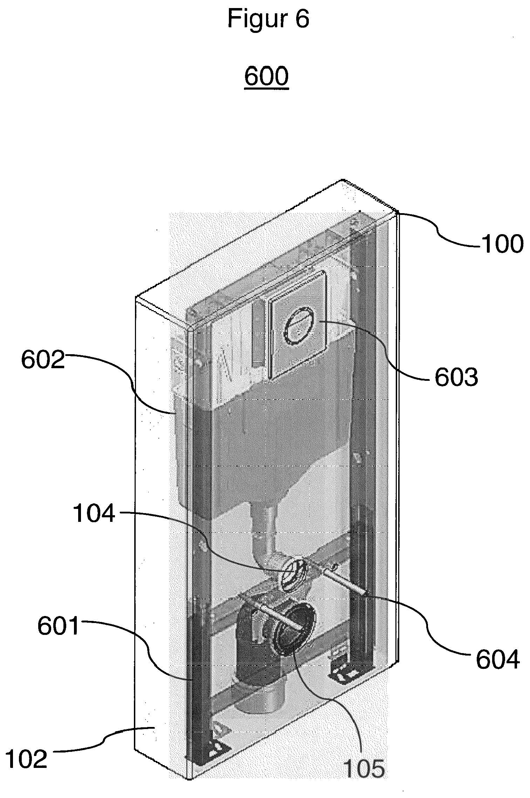

Figur 6 zeigt eine erfindungsgemäße Vorrichtung 600. Die Vorrichtung 600 beinhaltet die Vorwandinstallationsabdeckung 100 gemäß Figur 2a). Ferner beinhaltet die Vorrichtung 600 in dem Innenraum 101 einen Trägerrahmen 601 aus Stahl, eine Vorwandinstallation 602, hier einen Spülkasten 602, eine Handauslöseeinrichtung 603, hier ein Drucktaster 603 zu einem Auslösen einer Spülung mittels des Spülkastens 602, und Befestigungsbolzen 604 in den Befestigungsöffnungen 106 zum Befestigen einer Toilettenschüssel 701 (nicht dargestellt) an dem Trägerrahmen 601. In Figur 6 ist die blickdichte Vorwandinstallationsabdeckung 100 transparent dargestellt, um den Innenraum 101 sichtbar zu machen.

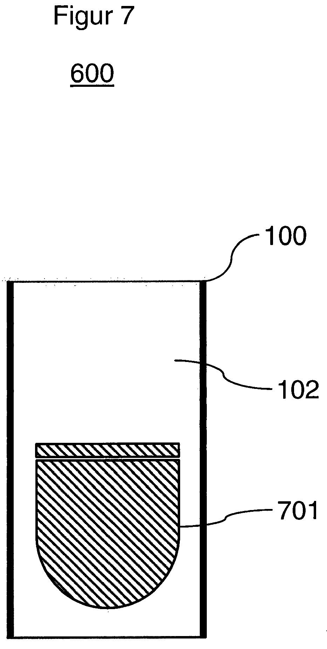

Figur 7 zeigt eine weitere erfindungsgemäße Vorrichtung 600. Die Vorrichtung 600 ist wie die Vorrichtung 600 in Figur 6, wobei die Vorrichtung in Figur 7 weiter eine mittels der Befestigungsbolzen 604 an dem Trägerrahmen 601 hängend befestigte Toilettenschüssel 701 beinhaltet. Hierbei befindet sich die Außenoberfläche 102 zwischen der Toilettenschüssel 701 und dem Trägerrahmen 601. Somit durchdringen die Befestigungsbolzen 604 die Vorwandinstallationsabdeckung 100 in den dafür vorgesehenen Befestigungsöffnungen 106.

### BEZUGSZEICHEN

- **100**: erfindungsgemäße Vorwandinstallationsabdeckung
- **101**: Innenraum
- **102**: Außenoberfläche
- **103**: Innenoberfläche
- **104**: Zuflussöffnung
- **105**: Abflussöffnung
- **106**: Befestigungsöffnung
- **107**: Handauslöseöffnung
- **300**: Schichtfolge
- **301**: thermoplastische Schicht
- **302**: erste Verstärkungsschicht
- **303**: weitere Verstärkungsschicht
- **401**: Ausnehmung
- **501**: Wand
- **502**: Rahmenbereich
- **600**: erfindungsgemäße Vorrichtung
- **601**: Trägerrahmen
- **602**: Vorwandinstallation / Spülkasten
- **603**: Handauslöseeinrichtung
- **604**: Befestigungsbolzen
- **701**: Toilettenschüssel

## Patentansprüche

1. Eine Vorwandinstallationsabdeckung (100), wobei die Vorwandinstallationsabdeckung (100) einen wandseitig vorgesehenen Innenraum (101) mindestens teilweise schalenförmig umgibt,
wobei die Vorwandinstallationsabdeckung (100) eine dem Innenraum (101) zugewandte Innenoberfläche (103) und eine dem Innenraum (101) abgewandte Außenoberfläche (102) beinhaltet,
wobei die Vorwandinstallationsabdeckung (100) über mindestens 50 % der Außenoberfläche (102) in Richtung von der Außenoberfläche (102) zu der Innenoberfläche (103) eine Schichtfolge (300) beinhaltend als einander überlagernde Schichten
a) eine thermoplastische Schicht (301) beinhaltend ein thermoplastisches Material mit einem ersten Elastizitätsmodul,
b) eine erste Verstärkungsschicht (302) beinhaltend ein erstes Verstärkungsmaterial mit einem zweiten Elastizitätsmodul, und
c) eine weitere Verstärkungsschicht (303) beinhaltend ein weiteres Verstärkungsmaterial mit einem dritten Elastizitätsmodul,
beinhaltet,
wobei der zweite Elastizitätsmodul oder der dritte Elastizitätsmodul oder jeweils beide mehr ist als der erste Elastizitätsmodul.

2. Die Vorwandinstallationsabdeckung (100) nach Anspruch 1, wobei die thermoplastische Schicht (301) **gekennzeichnet ist durch** eine erste Schichtdicke,
wobei die erste Verstärkungsschicht (302) **gekennzeichnet ist durch** eine weitere Schichtdicke,
wobei die erste Schichtdicke weniger ist als die weitere Schichtdicke.

3. Die Vorwandinstallationsabdeckung (100) nach Anspruch 1 oder 2, wobei die thermoplastische Schicht (301) **gekennzeichnet ist durch** eine Schichtdicke in einem Bereich von 1 bis 20 mm.

4. Die Vorwandinstallationsabdeckung (100) nach einem der vorhergehenden Ansprüche, wobei das thermoplastische Material ein acrylbasiertes Polymer ist.

5. Die Vorwandinstallationsabdeckung (100) nach einem der vorhergehenden Ansprüche, wobei das weitere Verstärkungsmaterial eine Vielzahl von Fasern beinhaltet.

6. Die Vorwandinstallationsabdeckung (100) nach einem der vorhergehenden Ansprüche, wobei die Außenoberfläche (102) nahtlos oder fugenlos oder beides ist.

7. Eine Vorrichtung (600) beinhaltend die Vorwandinstallationsabdeckung (100) nach einem der vorhergehenden Ansprüche, wobei der Innenraum (101) einen Trägerrahmen (601) und eine Vorwandinstallation (602) beinhaltet.

8. Die Vorrichtung (600) nach Anspruch 7, wobei die Vorwandinstallation (602) ein Spülkasten (602) oder ein Druckspüler oder beides ist,
wobei der Innenraum (101) weiter einen Sensor und eine Auslöseeinrichtung beinhaltet,
wobei der Sensor und die Auslöseeinrichtung ausgebildet sind zu einem berührungslosen Auslösen eines Spülvorgangs mittels der Vorwandinstallation (602).

9. Die Vorrichtung (600) nach Anspruch 7, wobei die Vorwandinstallation (602) ein Spülkasten (602) oder ein Druckspüler oder beides ist,
wobei die Vorrichtung (100) weiter eine Handauslöseeinrichtung (603) beinhaltet,
wobei die Handauslöseeinrichtung (603) ausgebildet ist zu einem Auslösen eines Spülvorgangs mittels der Vorwandinstallation (602) durch manuelle Betätigung.

10. Eine Verwendung der Vorwandinstallationsabdeckung (100) nach einem der Ansprüche 1 bis 6 zu einem Abdecken einer Vorwandinstallation (602).
